# EUROPÄISCHE PATENTSCHRIFT

(11) **EP 2 386 822 B1**
(45) Veröffentlichungstag und Bekanntmachung des Hinweises auf die Patenterteilung: **14.09.2016**
(21) Anmeldenummer: 11162547.1
(22) Anmeldetag: 15.04.2011
(51) Int. Cl.: G01B 7/06

(54) **Verfahren und Vorrichtung zur Messung der Dicke dünner Schichten an großflächigen Messoberflächen**
Method and device for measuring the thickness of thin coatings on large-scale measuring surfaces
Procédé et dispositif de mesure de l'épaisseur de couches minces sur des surfaces de mesure de grande taille

(30) Priorität: 10.05.2010 DE 102010020116
(43) Veröffentlichungstag der Anmeldung: 16.11.2011
(73) Patentinhaber: Helmut Fischer GmbH Institut für Elektronik und Messtechnik., 71069 Sindelfingen (DE)
(72) Erfinder: Fischer, Helmut, 6315 Oberägeri (CH)
(74) Vertreter: Maser, Jochen

(56) Entgegenhaltungen:
- DE-A1-102005 054 593
- DE-A1-102007 062 966
- DE-C1- 10 053 410
- JP-A- 2007 240 458
- US-A- 4 767 987
- US-A- 5 831 430

## Beschreibung

Die Erfindung betrifft ein Verfahren und eine Vorrichtung zur Messung der Dicke dünner Schichten auf großflächigen Messoberflächen, wie beispielsweise Schiffskörpern.

Die Messung der Dicke dünner Schichten mit einer Messsonde, welche zumindest ein Sensorelement und zumindest eine dem Sensorelement zugeordnete Aufsetzkalotte aufweist, ist beispielsweise aus der DE 10 2005 054 593 A1 bekannt. Durch eine solche Messsonde können in Abhängigkeit des Grundwerkstoffes und der Beschichtung Messungen nach dem magnetinduktiven Verfahren oder nach dem Wirbelstromverfahren durchgeführt werden. Solche Messsonden werden beispielsweise von Hand auf eine Messoberfläche aufgesetzt, um die Schichtdicke zu erfassen. Ein solches Verfahren eignet sich beispielsweise nicht, um großflächige Beschichtungen beziehungsweise Messoberflächen, wie beispielsweise einen Schiffsrumpf oder einen Tragflügel eines Flugzeuges, zu messen und zu prüfen.

Aus der US 5,831,438 A ist eine Messvorrichtung zur Messung der Dicke dünner Schichten bekannt, welche ein Anzeigegerät aufweist, an dem ein oder mehrere Messsonden anschließbar sind. An einem scheibenförmigen Körper können mehrere Messsonden aufgenommen werden, die V-förmig benachbart zueinander angeordnet sind. Die Gehäuse der jeweiligen Messsonde ragen gegenüber dem scheibenförmigen Halter radial nach außen vor, so dass wahlweise eine der Messsonden ausgewählt und zur Messung verwendet werden kann.

Aus der DE 100 53 410 C2 ist ein Verfahren zum differenzierten Schleifen an einer mit einem leitfähigen Material beschichteten Platte der Leiterplatine vorgesehen. Zusätzlich weist die Schleifanlage ein Linearachsensystem auf, welches einen in X-, Y-, Z-Richtung verfahrbaren Schlitten umfasst, um eine daran angeordnete Messsonde entlang der aufgebrachten leitfähigen Schicht zu führen und einzelne Messungen durchzuführen.

Aus der US 4,767,987 A ist eine Schichtdickenmessvorrichtung bekannt, bei der innerhalb einer Mantelfläche einer Trommel zumindest ein Messelement vorgesehen ist.

Aus der JP 2007 240 458 A ist eine Messwalze bekannt, bei welcher mehrere Messsonden innerhalb einer geschlossenen Walzenfläche angeordnet sind, so dass das zu prüfende bahnförmige Material, welches an der Walze entlanggeführt und umgelenkt wird, bezüglich der Schichtdicke erfasst werden kann.

Aus der DE 10 2007 062966 A1 ist eine Methode zur Kalibrierung von Schichtdickennormalen vorgeschlagen, bei welchen die Topographie eines Teils eines Substrats ohne Beschichtung und eines beschichteten Teils der Oberflächen der Schichtdickennormalen gemessen sowie aufgrund der erhaltenen Messdaten die Dicke der Schichtdickennormalen berechnet wird.

Der Erfindung liegt deshalb die Aufgabe zugrunde, ein Verfahren und eine Vorrichtung zur Messung der Dicke dünner Schichten vorzuschlagen, wodurch die zu prüfende Messoberfläche in einfacher Weise flächendeckend erfasst wird.

Diese Aufgabe wird durch ein Verfahren gemäß den Merkmalen des Anspruchs 1 und eine Vorrichtung gemäß den Merkmalen des Anspruchs 6 gelöst. Weitere vorteilhafte Ausführungsformen sind in den jeweiligen abhängigen Ansprüchen angegeben.

Bei dem erfindungsgemäßen Verfahren ist vorgesehen, dass die großflächige Messoberfläche in einzelne Teilflächen untergliedert wird, dass für jede Teilfläche eine Matrix von Messpunkten bestimmt wird und mit zumindest einer Vorrichtung, welche zumindest einen Rotationskörper mit zumindest einer Lauffläche aufweist und die zumindest eine Messsonde aufnimmt und auf der Messoberfläche aufgesetzt wird und entlang zumindest einer Zeile der Matrix abgerollt wird und an äquidistanten Messpunkten Messwerte erfasst werden und dass nacheinander alle Zeilen der Matrix in der einen Teilfläche die Messwerte erfasst und für diese Teilfläche ausgewertet werden. Durch die Erfassung von äquidistanten Messwerten entlang von mehreren Zeilen kann eine Rasterung oder eine Matrix von Messpunkten für eine einzelne Teilfläche in einfacher Weise ermöglicht werden, wodurch eine Auswertung der bestehenden Schichtdicken dieser Teilfläche gegeben ist. Zur flächendeckenden Beurteilung der großflächigen Messoberfläche können einzelne ausgewählte Teilflächen oder alle Teilflächen, die der Fläche der gesamten Messoberfläche entsprechen, herangezogen werden. Durch die in einer Matrix angeordneten Messpunkte kann auch innerhalb der Teilflächen eine Auswertung bezüglich Veränderungen der Schichtdicke ermöglicht werden. Darüber hinaus kann bereits bei der Auswertung einer ersten Teilfläche eine Aussage über die gemessene Schichtdicke im Verhältnis zu den vorgegebenen Mindestschichtdicken ermöglicht werden.

Nach einer bevorzugten Ausführungsform des Verfahrens ist vorgesehen, dass die Vorrichtung zur Durchführung der Messung, dass die zumindest eine Messsonde entlang einer Zeile abgerollt wird, so dass die zumindest eine Messsonde am Tiefpunkt einer Zykloidbahn auf die Messoberfläche aufgesetzt wird. Dadurch kann eine kontinuierliche Messung stattfinden, wodurch eine verkürzte Messzeit ermöglicht wird. Durch die Anordnung der Messsonde an einem Rotationskörper können darüber hinaus an jedem Messpunkt dieselben Aufsetzbedingungen und somit Messbedingungen zur Erfassung der Dicke dünner Schichten gewährleistet werden. Die Vorrichtung wird aktiv nach dem Erfassen von Messwerten an allen Messpunkten der Teilfläche zur nächsten Teilfläche umgesetzt, um diese Matrix der Messpunkte zu erfassen. Eine solche Messmethode wird beispielsweise bei großen Messoberflächen, an Gegenständen oder Vorrichtungen durchgeführt, deren Handhabung selbst äußerst beschwerlich ist.

Eine bevorzugte Ausführungsform des Verfahrens sieht vor, dass an dem Rotationskörper eine Anschlagvorrichtung, insbesondere eine Anschlagscheibe oder ein Anschlussring mit einem größeren Durchmesser als der Rotationskörper angebracht wird und die Vorrichtung mit Anschlagvorrichtung entlang einer Kante der Messoberfläche geführt wird. Dadurch wird ermöglicht, dass in einem unmittelbaren Randbereich entlang einer Kante der Messoberfläche ein definiertes Aufsetzen und Entlangführen der Rotationssonde zur Durchführung der Messung erfolgen kann. Durch diese Anordnung kann ein definierter Abstand zwischen der Kante und den aufeinanderfolgenden Messpunkten entlang der Kante ermöglicht werden. Insbesondere bei Schiffen bzw. doppelwandigen Schiffen, die besonders korrosionsgefährdet sind, ist die Messung der Dicke dünner Schichten in einem vorgegebenen Abstand von der Kante besonders wichtig. Dieser kann beispielsweise durch eine solche Anschlagscheibe oder einen Anschlussring oder einem darauf angebrachten und insbesondere austauschbar vorgesehenen Distanzring ermöglicht werden. Alternativ kann auch vorgesehen sein, dass anstelle dem Entlangführen der Vorrichtung mit dem Rotationskörper, an dem eine Anschlagscheibe oder ein Anschlagring angeordnet ist, dieser Rotationskörper lagefixiert zu einem bandförmigen Material positioniert wird, welches mit einer diskontinuierlichen oder kontinuierlichen Bahngeschwindigkeit bewegt wird. Eine alternative Ausführungsform des Verfahrens sieht vor, dass die Vorrichtung zur Messung der Dicke dünner Schichten mit zumindest einer Messsonde in den vorbestimmten Zeitabständen auf eine rotierende Messoberfläche oder auf eine bahnförmige Messoberfläche aufgesetzt wird. Durch die verfahrensbedingte Messung werden ebenfalls Messwerte in äquidistanten Messpunkten erfasst. Somit wird bei dieser Ausführungsform abweichend zur vorgenannten Ausführungsform, bei der die äquidistanten Messpunkte durch eine geometrische Größe, wie beispielsweise durch den Umfang des Laufrades, bestimmt sind, vorliegend der Abstand der Messpunkte durch eine Zeittaktung bestimmt.

Eine weitere bevorzugte Ausgestaltung des Verfahrens sieht vor, dass aus den Messwerten jeder Teilfläche die Mittelwerte x und die Standardabweichung s bestimmt und daraus ein Variationskoeffizient V = 100 x s/x̅ % ermittelt wird, der als Vergleichswert einer Bewertungstabelle für die Beurteilung der Qualität der Beschichtung gegenübergestellt wird. Für die Beurteilung der Qualität der Beschichtung wird entsprechend den Anforderungen an die Sicherheit und somit der vorhandenen Mindestschichtdicke ein Variationskoeffizient festgelegt. Diese prozentuale Angabe des Variationskoeffizienten wird in der Bewertungstabelle in unterschiedliche Gruppen, beispielweise "Hervorragend", "Gut", "Noch ausreichend", "Oft nicht ausreichend" untergliedert und jeweils ein entsprechender Wert des Variationskoeffizienten zugeordnet. Aufgrund der Ermittlung des Variationskoeffizienten für jede Teilfläche kann der ermittelte Zahlenwert mit dem vorgegebenen Zahlenwert verglichen und umgehend eine Aussage über die Beschichtung getroffen werden, und zwar dahingehend, ob die Beschichtungsqualität den Anforderungen nur teilweise entspricht, nicht entspricht oder beispielsweise vollständig entspricht.

Die der Erfindung zugrunde liegende Aufgabe wird des Weiteren durch eine Vorrichtung gelöst, bei der ein Rotationskörper mit einer Lauffläche zumindest eine Messsonde aufweist, wobei die Lauffläche so ausgeführt ist, dass sie auf der Messoberfläche aufgesetzt und entlanggeführt werden kann und eine Aufsetzkalotte der Messsonde zumindest geringfügig gegenüber der Lauffläche radial nach außen hervorsteht und mitrotierend am Rotationskörper angeordnet ist, so dass die Messsonde entlang einer Zykloidbahn zur Messoberfläche geführt ist. Durch diese Vorrichtung kann eine Rotationssonde geschaffen werden, welche in Abhängigkeit des Durchmessers des Rotationskörpers in regelmäßigen Abständen auf der Messoberfläche aufgesetzt wird. Dabei führt die Messsonde eine Bewegung entlang einer Zykloidbahn durch. Der Rotationskörper mit seiner Lauffläche, der auf der Messoberfläche entlang geführt wird, dient lediglich dazu, um die Messsonde in äquidistanten Messpunkten aufzusetzen und einen Messwert zu erfassen. Der Rotationskörper selbst nimmt an der Messung nicht teil. Der Rotationskörper dient vielmehr dazu, nur äquidistante Messpunkte zu gewährleisten, welche später zu einer Matrix in einer Auswerteeinrichtung zusammengefasst werden.

Eine vorteilhafte Ausgestaltung der Vorrichtung sieht zumindest zwei oder mehrere Rotationskörper vor, die an einer gemeinsamen Achse drehbar gelagert und geführt sind und nur ein Rotationskörper zumindest eine Messsonde aufweist. Diese Anordnung von zwei oder mehreren Rotationskörpern entlang einer gemeinsamen Achse weist den Vorteil auf, dass dadurch eine Verkippungs-sicherheit gegenüber der Messoberfläche gegeben ist und ein senkrechtes Positionieren der Messsonde zur Messoberfläche im Messpunkt ermöglicht wird.

Eine weitere bevorzugte Ausführungsform der Vorrichtung sieht vor, dass zwei oder mehrere Rotationskörper, die jeweils die zumindest eine Messsonde aufnehmen, mit einer starren Achse verbunden und die Messsonden in derselben Winkellage ausgerichtet sind. Diese Vorrichtung weist den Vorteil auf, dass beispielsweise bei zwei benachbart zueinander angeordneten Rotationskörpern und jeweils einer Messsonde gleichzeitig von zwei in benachbarten Zeilen liegenden Messpunkten Messwerte erfasst werden können. Dadurch kann eine weitere Zeitersparnis bei der Erfassung der Messwerte entlang den Messpunkten innerhalb einer Teilfläche ermöglicht werden. Ebenso können drei oder mehrere Rotationskörper mit jeweils zumindest einer Messsonde vorgesehen sein, um eine quasi Mehrfachmessung durchzuführen. Diese Anordnung weist auch den Vorteil auf, dass die Zeilenabstände für die einzelnen Messpunkte einen definierten Abstand aufweisen. Des Weiteren kann die Vorrichtung bevorzugt entsprechend der Anzahl von Zeilen einer Teilfläche Rotationskörper aufweisen, so dass nur durch einmaliges Entlangfahren der Zeile an jedem Messpunkt der Teilfläche Messwerte erfasst werden. Damit die einzelnen Messpunkte alle in derselben Spalte liegen, sind die Rotationskörper starr miteinander verbunden und die Winkellage der Messsonde in den zueinander benachbarten Rotationskörpern gleich ausgerichtet.

Eine weitere bevorzugte Ausgestaltung der Vorrichtung sieht vor, dass die Messsonde federnd nachgiebig zum Eintauchen in dem Rotationskörper gegenüber der Lauffläche gelagert ist. Dadurch ist an jedem Messpunkt eine gleiche Aufsetzkraft der Messsonde auf der Messoberfläche sichergestellt, um somit an jedem Messpunkt gleichbleibende Messbedingungen zu schaffen. Bevorzugt ist dabei vorgesehen, dass das Sensorelement von einer Federung aus zwei parallelen und zueinander beabstandeten Federelementen, insbesondere Blattfedern, gehalten ist. Dadurch wird eine in Achslängsrichtung des Sensorelementes geführte Verschiebebewegung oder Eintauchbewegung beim Aufsetzen der Aufsetzkalotte auf der Messoberfläche bewirkt. Somit kann die Messsonde im Aufsetzpunkt senkrecht zur Messoberfläche stehen. Alternativ zu der Aufnahme von zwei parallel ausgerichteten Federelementen, insbesondere Blattfedern, kann auch eine membranartige Federung des Sensorelementes an der Aufsetzkalotte vorgesehen sein. Eine solche Ausführungsform ist beispielsweise aus der DE 10 2005 054 593 A1 bekannt, auf welche vollumfänglich Bezug genommen wird.

Eine weitere bevorzugte Ausgestaltung der Vorrichtung sieht in dem Rotationskörper zumindest eine Speichereinrichtung für die erfassten Messwerte vor. Dadurch kann dezentral eine Messwerterfassung erfolgen, ohne dass eine Leitungsanbindung für eine Auswerteeinheit erforderlich ist. Des Weiteren ist an dem Rotationskörper bevorzugt eine mit der Speichereinrichtung in Verbindung stehende Schnittstelle zum Auslesen der Messwerte und/oder eine Sende- und Empfangseinrichtung zur drahtlosen Datenübertragung an eine Auswerteeinrichtung vorgesehen. Beispielsweise kann diese Schnittstelle als serielle Schnittstelle oder als USB-Schnittstelle ausgebildet sein. Des Weiteren kann die Sende- und Empfangseinrichtung eine Datenübertragung per Funk, Bluetooth oder dergleichen ermöglichen.

Eine bevorzugte Ausgestaltung der Vorrichtung sieht vor, dass an dem einen Rotationskörper eine Anschlagvorrichtung, insbesondere eine Anschlagscheibe oder ein Anschlagring, anordenbar ist, deren oder dessen Umfang größer als der Durchmesser des Rotationskörpers ist. Dadurch kann ermöglicht werden, dass der Rotationskörper gezielt und mit einem vorbestimmten Abstand entlang einer Kante eines Messgegenstandes geführt wird, um eine definierte Messung der Dicke dünner Schichten mit einem vorbestimmten Abstand von der Kante durchzuführen.

Des Weiteren ist bevorzugt vorgesehen, dass an dem Anschlagring oder an der Anschlagvorrichtung an einer seitlichen Umfangsfläche ein Distanzring auswechselbar angeordnet ist. Dieser Distanzring ermöglicht, dass in Abhängigkeit des Anwendungsfalles ein vorbestimmter Abstand zur Messung der Schichtdicke ausgehend von der äußeren Kante einstellbar ist. Somit kann beispielsweise bei einem fest an dem Rotationskörper angeordneten Anschlagring oder einer Anschlagscheibe dennoch eine Veränderung der Distanz vorgesehen sein. Sofern der Distanzring und die Anschlagscheibe oder der Anschlagring eine Einheit bilden, kann in Abhängigkeit der Dicke des Anschlagringes oder der Anschlagscheibe, die auf dem Rotationskörper aufbringbar ist, wiederum der Abstand der Messung zur Beschichtungskante eingestellt und definiert werden.

Eine vorteilhafte Weiterbildung der Vorrichtung sieht den zumindest einen Rotationskörper mit der zumindest einen Messsonde an einem Messwagen vor, der zumindest eine Führungsrolle aufweist. Ein solcher Messwagen kann wiederum zur Vermeidung einer Verkippung dienen, insbesondere dann, wenn durch den oder die Rotationskörper und/oder die Führungsrollen eine Dreipunktauflage gegeben ist. Darüber hinaus kann ein definiertes Aufsetzen und Entlangführen des Rotationskörpers durch Unterstützung der Führungsrolle vorgesehen sein. Vorzugsweise ist zwischen dem oder den Rotationskörpern und der Führungsrolle ein Fahrgestell vorgesehen, an welchem beispielsweise ein Haltemagnet anordenbar ist. Durch eine solche Anordnung wird bei den zu prüfenden Teilflächen, welche überhängend sind, dennoch eine Messung der Messoberfläche ermöglicht, da aufgrund des Haltemagneten der Messwagen zur Messoberfläche gehalten wird.

Eine weitere bevorzugte Ausgestaltung der Vorrichtung sieht vor, dass der Lauffläche des Rotationskörpers, welcher gegenüber die zumindest eine Messsonde hervorsteht, eine Reinigungsvorrichtung zugeordnet ist, welche zumindest die Aufsetzkalotte der Messsonde reinigt. Dadurch wird bei jeder Umdrehung des Rotationskörpers die Aufsetzkalotte gereinigt, so dass eine Vielzahl von Teilflächen hintereinander abgeprüft werden können und gleichmäßige Bedingungen für die Messwerterfassung vorliegen. Die Reinigungsvorrichtung ist beispielsweise durch Borsten oder rotierende Borsten ausgebildet, um gegebenenfalls an der Aufsetzkalotte anhaftende Verschmutzungen zu entfernen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht eines Schiffes mit einem beschichteten Schiffsrumpf, dessen Beschichtung als Messoberfläche in Teilflächen untergliedert ist,
- Figur 2: eine Darstellung einer Teilfläche mit einer Matrix von Messpunkten,
- Figuren 3a bis c: eine schematische Seitenansicht einer Vorrichtung zur Erfassung von Messwerten an den Messpunkten der Teilfläche,
- Figur 4: eine schematische Seitenansicht einer alternativen Ausführungsform der Messvorrichtung zu Figur 3a,
- Figur 5: eine schematische Ansicht einer alternativen Ausführungsform der Vorrichtung gemäß den Figuren 3a bis c,
- Figur 6: eine Darstellung einer Teilfläche mit einer Matrix von Messpunkten,
- Figuren 7a und b: schematische Ansichten einer weiteren alternativen Ausführungsform der Messvorrichtung zu Figur 3a und
- Figur 8: ein Diagramm, in welchem ein Unterschreitungsanteil in Abhängigkeit vom Verhältnis x̅ / Tₘᵢₙ für die Variationskoeffizienten 15 %, 20 % und 25 % angegeben ist.

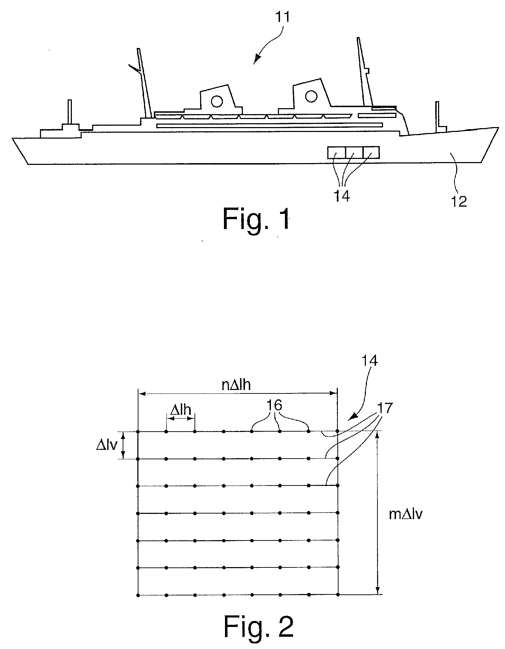

In Figur 1 ist eine schematische Ansicht eines Schiffes 11 dargestellt. Eine Beschichtung an einem Schiffsrumpf bildet beispielsweise eine großflächige Messoberfläche 12. Aufgrund von erhöhten Sicherheitsanforderungen und zur Vermeidung von Korrosion kommt der Qualität der Beschichtung an Schiffsrümpfen große Bedeutung zu, zumal dadurch Schiffshavarien verhindert werden können. Deshalb müssen solche Beschichtungen einen Mindestwert an Schichtdicke für eine Beschichtung aufweisen. Die Einhaltung von solchen Mindestwerten kann nur dann gewährleistet werden, wenn ein Mittelwert der Schichtdicke ausreichend höher als der Mindestwert ist. Der notwendige Abstand zwischen dem Mittelwert und dem Mindestwert der Schichtdicke hängt von der dem Beschichtungsprozess immanenten Streuung ab. Als Maß für die Streuung wird zweckmäßigerweise der Variationskoeffizient V benutzt. Dieser ist das Verhältnis der Standardabweichung s zum Mittelwert x der gemessenen Schichtdickenwerte. Durch diesen Variationskoeffizienten kann eine Aussage über die Qualität der Beschichtung getroffen werden, und zwar dahingehend, ob die Mindestschichtdicke immer, teilweise oder nicht im erforderlichen Maße vorliegt. Dabei kann der ermittelte Variationskoeffizient mit einer Bewertungstabelle verglichen werden, die anhand von ausgewerteten Prozessergebnissen erstellt und in verschiedene Aussagen kategorisiert ist. Die Aussage kann beispielsweise "Hervorragend", "Gut", "Noch ausreichend" oder "Oft nicht ausreichend" sein und diesen Aussagen ist jeweils eine maximale Obergrenze des prozentualen Wertes des Variationskoeffizienten zugeordnet. Somit kann eine schnelle Aussage über die Qualität der Beschichtung getroffen werden, indem aufgrund der ermittelten Einzelmesswerte des daraus errechneten Variationskoeffizienten ein Vergleich mit der Bewertungstabelle von ausgewerteten Prozessergebnissen erfolgt.

Zur rationalen Beurteilung soll für großflächige Beschichtungen die Messoberfläche 12 in einzelne Teilflächen 40 untergliedert werden, die ein Vielfaches kleiner als die Messoberfläche 12 sind. Bevorzugt erfolgt die Untergliederung in gleich große Teilflächen 40.

Eine solche Teilfläche 40 der großflächigen Messoberfläche 12 ist vergrößert in Figur 2 dargestellt. Diese Teilfläche 40 weist eine Matrix aus Messpunkten 16 auf, die in äquidistanten Abständen ● Ih entlang einer Zeile 17 vorgesehen sind. Die Zeilen 17 wiederum sind bevorzugt in gleichen Abständen ● Iv parallel zueinander angeordnet, so dass sich eine Matrix von Messpunkten 16 beziehungsweise ein Netz von Messpunkten 16 gleichmäßig verteilt über die Teilfläche 14 ergibt. Dadurch kann eine hinreichende Aussage über die Schichtdicke beziehungsweise den Schichtdickenverlauf für diese Teilfläche 14 ermöglicht werden, ohne dass eine vollflächige Schichtdickenmessung erforderlich ist.

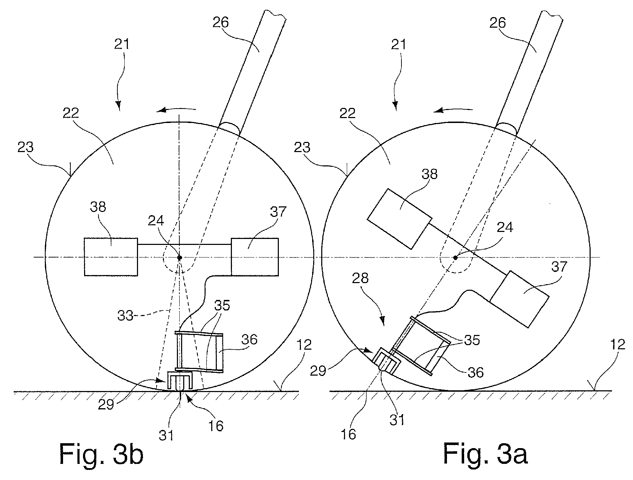

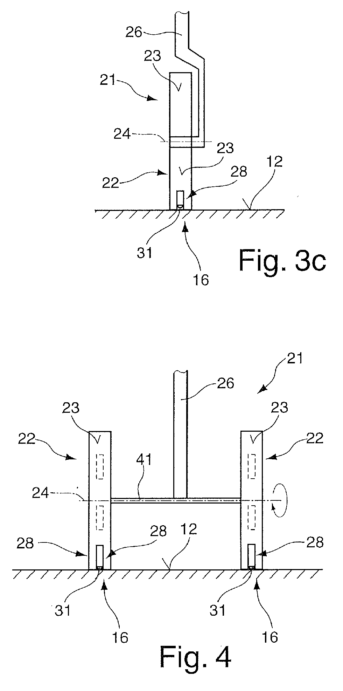

Zur Erfassung von Messwerten an den äquidistanten Messpunkten 16 ist erfindungsgemäß eine Vorrichtung 21 beziehungsweise eine Messvorrichtung gemäß den Figuren 3a bis c vorgesehen, welche einen Rotationskörper 22 mit einer Lauffläche 23 aufweist. Dieser Rotationskörper 22 ist beispielsweise drehbar um eine Achse 24, an einer Stange oder einem Stab 26 gelagert, so dass der Benutzer über den Stab 26 die Lauffläche 23 des Rotationskörpers 22 auf der Messoberfläche 12 aufsetzen und entlangführen kann. Der Rotationskörper 22 kann durch eine einseitig oder beidseitig gelagerte Achse rotierend zum Stab 26 angeordnet sein. Der Rotationskörper 22 ist bevorzugt als Laufrad ausgebildet und nimmt der Lauffläche 23 zugeordnet eine Messsonde 28 im Rotationskörper 22 auf. Die Messsonde 28 kann auch außen am Rotationskörper 23 angeordnet sein. Der Rotationskörper 22 ist vorzugsweise scheibenförmig ausgebildet. Die Lauffläche 23 kann eine Kunststoffbeschichtung, Gummibeschichtung oder dergleichen umfassen. Die Oberfläche der Lauffläche 23 kann auch in Abhängigkeit der zu prüfenden Beschichtung zur Vermeidung von Beschädigungen ausgewählt werden.

Die Ausgestaltung des Rotationskörpers 22 kann beispielsweise als Laufrolle oder Laufrad vorgesehen sein. Ebenso kann der Rotationskörper 22 zumindest teilweise als Hohlkörper ausgebildet sein. Ein solcher Rotationskörper 22 kann einteilig ausgebildet sein, der einzelne Aufnahmeräume, beispielsweise für die Messsonde und/oder Steuerungskomponenten wie IC-Module, Funktionsmodule oder dgl., umfasst, die mit einem Deckel verschließbar sind. Ebenso kann beispielsweise ein zweischaliger Rotationskörper mit darin enthaltenen Aufnahmeräumen ausgebildet werden.

Die Messsonde 28 umfasst ein Sensorelement 29 sowie eine an dessen Längsachse angeordnete Aufsetzkalotte 31, wobei die Messsonde 28 an dem Rotationskörper 22 so positioniert ist, dass die Aufsetzkalotte 31 zumindest geringfügig gegenüber der Lauffläche 23 in einer Ausgangsposition nach außen vorsteht. Dies ist beispielsweise in Figur 3b dargestellt. Das Sensorelement 29 kann dabei beispielsweise als Topfkern ausgebildet sein, welcher Spulenkörper aufnimmt. Im Hinblick auf die Ausgestaltung des Sensorelementes sowie der Ausführungsform als magnetinduktive Messsonde oder Wirbelstrommesssonde wird vollumfänglich auf die DE 10 2005 054 593 A1 Bezug genommen. Alternativ können auch mehrere Sensorelemente 29 gleicher oder verschiedener Bauart für gleiche oder verschiedene Messverfahren eine Messsonde 28 bilden.

Die Messsonde 28 ist federnd nachgiebig zum Rotationskörper 22 gelagert, das heißt, dass während einer Aufsetzbewegung innerhalb eines Winkelbereichs 33 ein Eintauchen des Sensorelementes 29 und ein Wieder-nach-Außen-Führen ermöglicht wird. Dabei rollt sich die Aufsetzkalotte 31 auf der Messoberfläche 27 ab. Diese federnd nachgiebige Anordnung des Sensorelementes 29 weist den Vorteil auf, dass eine definierte maximale Messkraft aufgebracht wird und ein gesichertes Aufliegen des Sensorelementes 29 an der Messoberfläche an jedem Messpunkt 16 ermöglicht ist.

Die Messsonde 28 ist gemäß einer ersten Ausführungsform durch zwei parallel zueinander ausgerichtete Federelemente 35, insbesondere Blattfederelemente, aufgenommen, die eine Parallelverschiebung des Sensorelementes 29 zur Lagerung 36 ermöglichen. Dabei ist das Sensorelement 29 senkrecht zur Messoberfläche 23 im Messpunkt 16 ausgerichtet. Alternativ kann vorgesehen sein, dass eine Messsonde gemäß der DE 10 2005 054 593 A1 eingesetzt wird, das heißt, dass das Sensorelement 29 mit der Aufsetzkalotte 31 durch ein membranförmiges Federelement aufgenommen wird. Diese Anordnung weist des Weiteren den Vorteil auf, dass eine wasserdichte Anordnung geschaffen werden kann, das heißt, dass das Sensorelement 29 einerseits federnd nachgiebig gelagert ist und andererseits über das membranartige Federelement eine wasserdichte Anordnung zum Gehäuserand der Messsonde 28 oder zum Aufnahmeraum des Rotationskörpers 22 ermöglicht ist, indem die Messsonde 28 angeordnet ist. Dadurch kann auch eine Messung unter Wasser erfolgen. Auch die in den Figuren 3a und b dargestellte Messsonde und Federlagerung ist in einem Aufnahmeraum des Rotationskörpers angeordnet.

In der Vorrichtung 21 ist bevorzugt zumindest ein Speichermedium, insbesondere ein IC-Chip, vorgesehen, welches die Messwerte der einzelnen Messpunkten 16 abspeichert. Ergänzend kann in dem Rotationskörper 22 eine Sende- und Empfangseinrichtung 38 integriert sein, durch welche die erfassten Messwerte drahtlos an eine nicht näher dargestellte Auswerteeinrichtung übermittelt werden. Ebenso können an einer Außenseite des Rotationskörpers 22 eine Datenschnittstelle oder mehrere Datenschnittstellen vorgesehen sein.

Im Ausführungsbeispiel gemäß den Figuren 3a bis c nimmt der Rotationskörper 22 nur eine Messsonde 28 auf. Das Sensorelement 19 wird beim Abrollen des Rotationskörpers 22 entlang der Messoberfläche 12 entlang einer Zykloidbahn geführt, wodurch in den äquidistanten Messpunkten 16 ein Aufsetzen der Messsonde 28 zur Erfassung eines Messwertes erfolgt. Die Figur 3a zeigt eine Position des Rotationskörpers 21 mit der Messsonde 28 kurz vor dem Aufsetzen der Messsonde 28 auf der Messoberfläche 12. Die Figur 3b zeigt beim weiteren Abrollen des Rotationskörpers 22 entlang der Messoberfläche 12 einen Aufsetzpunkt der Messsonde 28 auf der Messoberfläche 12 im Messpunkt 16. Kurz vor dem Messpunkt 16 erfolgt ein Berühren der Aufsetzkalotte 31 mit der Messoberfläche 12 und kurz nach dem Messpunkt 16 wieder ein vollständiges Abheben der Messsonde 28 von der Messoberfläche. Eine Verschiebebewegung des Sensorelementes 29 entlang der Messoberfläche 12 findet dabei nicht statt. Der Winkelbereich 33 für das Anliegen der Aufsetzkalotte 31 an der Messoberfläche 12 bestimmt sich nach dem Umfang des Rotationskörpers 22 und/oder dem Maß, um welches die Aufsetzkalotte 31 gegenüber der Lauffläche 23 des Rotationskörpers 22 hervorsteht.

Des Weiteren können zwei oder mehrere Messsonden 28 in dem einen Rotationskörper 22 gleichmäßig über den Umfang verteilt angeordnet sein. Somit kann beispielsweise ein Rotationskörper 22 mit einem großen Durchmesser drei Messsonden 28 und ein Rotationskörper 22 mit kleinem Durchmesser nur eine Messsonde 28 aufweisen sowie jeweils mit beiden Rotationskörpern an denselben äquidistanten Messpunkten 16 der Teilfläche 14 eine Messwerterfassung erfolgen.

Bei der Messwerterfassung wird gleichzeitig eine Zuordnung der Messwerte hintereinander entlang jeder Zeile und ebenfalls jeder Zeile zueinander innerhalb der Teilfläche vorgenommen. Dadurch kann bei der Auswertung der Messwerte gleichzeitig eine Zuordnung zu den jeweiligen Messpunkten innerhalb der Matrix erfolgen, so dass beispielsweise innerhalb der Teilfläche eine Veränderung der Schichtdicke erkannt werden kann.

Die in den Figuren 3a bis c dargestellte Vorrichtung 21 stellt somit eine Rotationssonde dar, die eine einfache Handhabung ermöglicht. Eine solche Rotationssonde kann nicht nur von Hand geführt werden, sondern auch maschinell gehalten oder durch eine Handhabungseinrichtung entlang einer Oberfläche verfahren werden.

In Figur 4 ist eine alternative Ausführungsform zu den Figuren 3a bis c dargestellt. Diese Vorrichtung 21 umfasst beispielsweise zwei Rotationskörper 22, die durch eine gemeinsame beziehungsweise starre Achse 41 miteinander verbunden sind. Jeder dieser Rotationskörper 22 weist zumindest eine Messsonde 28 auf. Diese sind in deren Winkellage gleich zueinander ausgerichtet. Der Abstand der Rotationskörper 22 zueinander entspricht bevorzugt dem Abstand ● Iv von zwei Zeilen 17 der Teilfläche 14. Diese Anordnung weist den Vorteil auf, dass durch eine Zweipunktanlage eine verkippungsfreie Anordnung des Rotationskörpers 22 zur Messoberfläche 12 gegeben ist.

Alternativ kann nur einer der beiden Rotationskörper 22 die zumindest eine Messsonde 28 aufnehmen und der zweite Rotationskörper 22 lediglich zur Ausrichtung und erleichterten Führung des Rotationskörpers 22 mit der Messsonde 28 zur Messoberfläche 12 dienen.

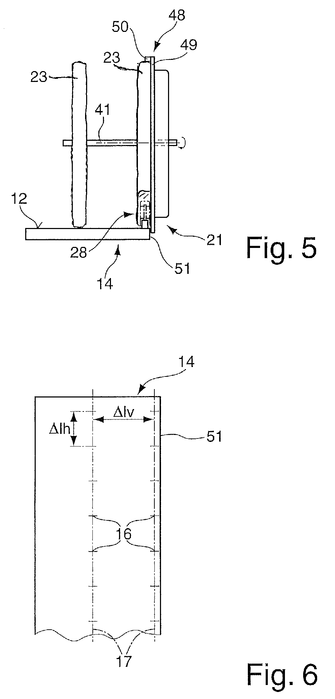

In Figur 5 ist eine schematische Ansicht auf eine Vorrichtung 21 dargestellt, wie diese beispielsweise aus Figur 4 hervorgeht. Die vorliegende Vorrichtung 21 unterscheidet sich dadurch, dass an dem Rotationskörper 22 eine Anschlagvorrichtung 48 in Form einer Anschlagscheibe 49 oder eines Anschlagringes anbringbar oder einteilig daran angeformt bzw. angeordnet ist, wodurch ermöglicht wird, dass über diese Anschlagvorrichtung 48 die Vorrichtung 21 entlang einer Kante 51 der Messoberfläche 12 geführt werden kann. Die Anschlagscheibe 49 oder der Anschlagring ist vorzugsweise austauschbar an dem Rotationskörper 22 vorgesehen und weist einen Außenumfang auf, der größer als derjenige des Rotationskörpers 22 ist. Bevorzugt ist vorgesehen, dass die Anschlagscheibe 49 an der seitlichen Umfangswand einen Distanzring 50 aufweist, durch welchen eine präzise Einstellung des Abstands der Messsonde 28 in der Rotationsvorrichtung bezüglich der zu prüfenden Kante 51 ermöglicht ist. Dies bedeutet, dass die Messsonden 28 bezüglich dem Abstand der Kante der Messoberfläche über solche Distanzringe 50, welche unterschiedliche Dicken bzw. Breiten aufweisen, einstellbar ist.

Aus Figur 6 geht beispielsweise eine Matrix von hintereinander im Abstand ● Ih angeordneten Messpunkten 16 hervor, die durch eine solche Vorrichtung 21 mit einem Abstand von ● Iv der Rotationsvorrichtungen 22 erfassbar ist. Der Abstand der Messpunkte 16, die unmittelbar der Kante der Messoberfläche zugeordnet sind, kann dabei über die Distanzringe 50 eingestellt werden, so dass beispielsweise ein Abstand von 0,2 bis 2 mm eingehalten werden kann.

Die Anschlagsvorrichtung 48 kann auch an einer Vorrichtung 11 mit nur einem Rotationskörper 22 angeordnet sein.

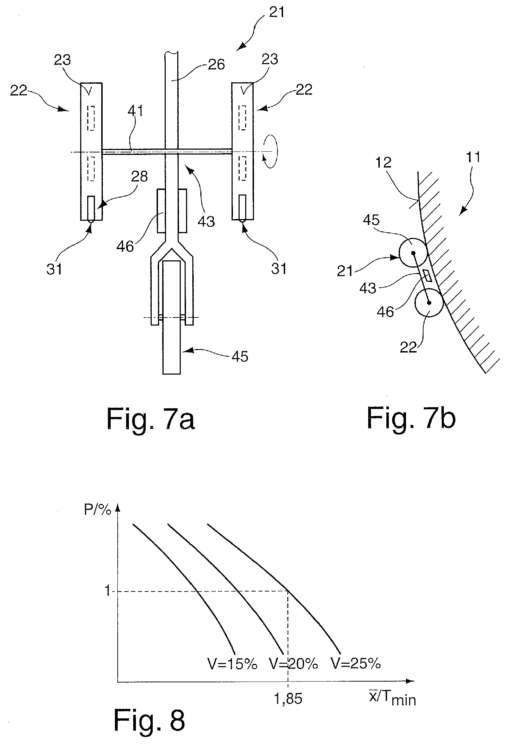

In den Figuren 7a und b sind weitere schematische Ansichten einer alternativen Ausführungsform der Vorrichtung 21 vorgesehen. Diese Vorrichtung 21 ist als Messwagen ausgebildet, der an einem Fahrgestell 43 die Achse 41 aufnimmt. Am Fahrgestell 43 ist zusätzlich eine Führungsrolle 45 vorgesehen, die zusammen mit den beiden weiteren Rotationskörpern 22 eine Art Dreipunktauflage für den Messwagen bildet. Über einen Stab 26 kann der Messwagen wiederum entlang der Teilfläche geführt werden. In Abhängigkeit der Ausrichtung der Messoberfläche 12, insbesondere bei einer überhängenden Anordnung wie bei einem Schiffsrumpf, können an dem Fahrgestell 43 ein oder mehrere Haltemagnete 46 vorgesehen sein, wodurch dennoch eine gesicherte Anlage der Vorrichtung 21 an der Messoberfläche 12 ermöglicht ist.

Alternativ kann der Messwagen gemäß den Figuren 7a und b einen eigenständigen Antrieb aufweisen, so dass dieser selbständig entlang den Zeilen 17 der Teilfläche 14 verfährt.

Des Weiteren kann bevorzugt vorgesehen sein, dass der Messwagen über eine Funkfernsteuerung bedienbar ist, so dass die Verfahrbewegung der Vorrichtung 21 entsprechend ansteuerbar und manipulierbar ist.

Zur Ermittlung der Qualität der Beschichtung, beispielsweise an Schiffsrümpfen, wird durch die Rotationssonde 28 gemäß den Figuren 3a bis c zunächst jede Zeile 17 der Teilfläche 14 abgefahren. Die in den Messpunkten 16 ermittelten Messwerte werden erfasst und für diese Teilfläche 14 abgespeichert. Daraus wird der Mittelwert x der Schichtdicke für die Teilfläche 14 ermittelt. Zur weiteren Qualitätsbeurteilung der Beschichtung ist erforderlich, dass der Mittelwert x der Schichtdicke ausreichend höher als der vorgegebene Mindestwert für die Beschichtung liegt. Der notwendige Abstand zwischen dem Mittelwert und Minimalwert hängt von der dem Beschichtungsprozess immanenten Streuung S ab. Als Maß für die Streuung S wird bevorzugt der Varianzkoeffizient V benutzt. Dieser ist das Verhältnis zur Standardabweichung s zum Mittelwert x der gemessenen Schichtdickenwerte, also V = 100 x s/x̅ [in Prozent]. Dieser Varianzkoeffizient V kann somit als Qualitätswert oder Vergleichswert der Beschichtung angesehen werden.

Für den jeweiligen Anwendungs- und Beurteilungsbereich können verschiedene prozentuale Bereiche eines Varianzkoeffizienten aus einem ausgewerteten Prozessergebnis festgelegt werden. Dabei kann beispielsweise ein Bereich bis 1 % als hervorragend angesehen werden, ein Bereich bis 5 % als gut, ein Bereich bis 10 % als noch ausreichend und ein Varianzkoeffizient von 15 % als nicht hinreichend eingestuft werden. Diese Bereiche können farblich abgestuft werden. Sobald für die jeweilige Teilfläche 14 der entsprechende Varianzkoeffizient ermittelt wurde, kann durch Vergleich der Bereiche ermittelt werden, ob die Teilfläche 14 eine gute, noch ausreichende oder nicht ausreichende Beschichtung umfasst.

Ausgehend hiervon kann beispielsweise beim Aufbringen von Beschichtungen auf Schiffsrümpfen eine Überwachung und Auswertung durchgeführt werden. Wesentliche Einsparungen beim Auftrag an Beschichtungsmaterial können immer dann erreicht werden, wenn eine Absenkung der Streuung und damit des Varianzkoeffizienten gelingt, da dadurch auch die Vorgabe für den Mittelwert entsprechend abgesenkt werden kann. Wird jedoch ein solcher Abstand zwischen Mittelwert und dem festgelegten Mindestwert zu klein, dann ist der zu erwartende Unterschreitungsanteil zwangsläufig entsprechend größer, das heißt, die erforderlichen Nachbesserungen entsprechend teurer. Ausgehend von diesen Überlegungen kann anhand eines vorgegebenen prozentualen Risikos eine Abschätzung über die beiliegende Tabelle gemäß Figur 8 erfolgen. Bei dieser Tabelle ist entlang der X-Achse das Verhältnis zwischen dem Mittelwert x und der Mindestschichtdicke Tₘᵢₙ aufgetragen. Entlang der Y-Achse ist das prozentuale Risiko bei einer Fehlerquote aufgetragen. Gleichzeitig ist entsprechend den Varianzkoeffizienten von beispielsweise V = 15 %, V = 20 % und V = 25 % ein Unterschreitungsanteil in der Mindestschichtdicke in Abhängigkeit vom Verhältnis des Mittelwertes zur Mindestschichtdicke angeben. Sofern beispielsweise ein Risiko von 1 % bei einem Varianzkoeffizient von 25 % ausgewählt wird, ist ein Verhältnis von circa 1,85 einzuhalten, das heißt, dass der 1,8-fache Abstand des Mittelwertes zum Mindestschichtdickenwert einzuhalten ist, um bei einem Risiko von 1 % Fehlerquote eine hinreichende Beschichtung zu erzielen. Somit kann unmittelbar nach einer erfolgten Beschichtung eine Qualitätsbeurteilung durchgeführt werden, so dass die weitere sich bei einem Schiffsrumpf im Prozess befindende Auftragsstärke bereits variiert wird. Ebenso kann auch die noch weitere aufzutragende Beschichtung in der Schichtdicke derart bestimmt werden, dass ein Ausgleich für den Fall geschaffen wird, wenn die ermittelte Beschichtungsstärke nicht hinreichend ist. Dadurch kann eine Reduzierung bei der Herstellung und gleichzeitig eine Sicherung des Beschichtungsprozesses erzielt werden.

## Patentansprüche

1. Verfahren zur Messung der Dicke dünner Schichten auf großflächigen Messoberflächen (12), bei dem zumindest eine Messsonde (28), die zumindest ein Sensorelement (29) und zumindest eine dem Sensorelement (29) zugeordnete Aufsetzkalotte (31) aufweist, auf der Messoberfläche (12) zur Erfassung eines Messwertes aufgesetzt wird, **dadurch gekennzeichnet,**
- **dass** die großflächige Messoberfläche (12) in einzelne Teilflächen (14) untergliedert wird,
- **dass** für jede zu prüfende Teilfläche (14) eine Matrix von Messpunkten (16) bestimmt wird,
- **dass** eine die zumindest eine Messsonde (28) tragende Vorrichtung (21), welche einen Rotationskörper (22) mit zumindest einer Lauffläche (23) aufweist und zumindest eine Messsonde (28) aufnimmt, auf der Messoberfläche (12) aufgesetzt wird, entlang zumindest einer Zeile (17) der Matrix der Teilfläche (14) abgerollt wird und an äquidistanten Messpunkten (16) Messwerte erfasst werden und
- **dass** nacheinander für alle Zeilen (17) der Matrix in der Teilfläche (14) die Messwerte erfasst und für diese Teilfläche (14) ausgewertet werden.

2. Verfahren nach Anspruch 1, **dadurch gekennzeichnet, dass** die zumindest eine Messsonde (28) entlang einer Zykloidbahn auf der Messoberfläche (12) geführt und an den einzelnen Messpunkten (16) aufgesetzt wird.

3. Verfahren nach Anspruch 1, **dadurch gekennzeichnet, dass** an dem Rotationskörper (22) eine Anschlagvorrichtung (48), insbesondere eine Anschlagscheibe oder ein Anschlagring, mit einem größeren Durchmesser als der des Rotationskörpers (22) angebracht wird und dass die Vorrichtung (21) mit der Anschlagvorrichtung (48) entlang einer Kante der Messoberfläche (12) geführt wird.

4. Verfahren nach Anspruch 1, **dadurch gekennzeichnet, dass** die Vorrichtung (21) mit der zumindest einen Messsonde (28) in vorbestimmten gleichen Zeitabständen auf eine rotierende Messoberfläche (12) oder eine bandförmig geführte Messoberfläche (12) aufgesetzt wird.

5. Verfahren nach Anspruch 1, **dadurch gekennzeichnet, dass** aus den Messwerten jeder Teilflächen (14) die Mittelwerte x und die Standardabweichung s ermittelt sowie daraus ein Varianzkoeffizient V = 100 x s/x̅ % ermittelt wird, der als Vergleichswert einer Bewertungstabelle zur Beurteilung der Qualität der Beschichtung gegenübergestellt wird.

6. Vorrichtung zur Messung der Dicke dünner Schichten auf großflächigen Messoberflächen (12), insbesondere zur Durchführung des Verfahrens nach einem der Ansprüche 1 bis 5, mit zumindest einer Messsonde (28), die ein Sensorelement (29) und zumindest eine dem Sensorelement (29) zugeordnete Aufsetzkalotte (31) aufweist, **dadurch gekennzeichnet, dass** die zumindest eine Messsonde (28) an einem Rotationskörper (22) mit einer Lauffläche (23) angeordnet ist, wobei die Lauffläche (23) so ausgeführt ist, dass sie auf der Messoberfläche (12) aufgesetzt und entlanggeführt werden kann und die Aufsetzkalotte (31) der Messsonde (28) zumindest geringfügig gegenüber der Lauffläche (23) radial nach außen hervorsteht und am Rotationskörper (22) mitrotierend angeordnet ist, so dass die Messsonde (28) entlang einer Zykloidbahn zur Messoberfläche (12) geführt ist.

7. Vorrichtung nach Anspruch 6, **dadurch gekennzeichnet, dass** zwei oder mehrere Rotationskörper (22) vorgesehen sind, die an einer gemeinsamen Achse drehgelagert und geführt sind und nur der eine Rotationskörper (22) die zumindest eine Messsonde (28) aufnimmt.

8. Vorrichtung nach Anspruch 6, **dadurch gekennzeichnet, dass** zwei oder mehrere Rotationskörper (22), die jeweils zumindest eine Messsonde (28) aufnehmen, mit einer starren Achse (41) verbunden und die Messsonden (28) in derselben Winkellage ausgerichtet sind.

9. Vorrichtung nach Anspruch 6, **dadurch gekennzeichnet, dass** die Messsonde (28) federnd nachgiebig zum Eintauchen gegenüber der Lauffläche (23) in dem Rotationskörper (22) gelagert ist sowie insbesondere eine Federung aus zwei parallel ausgerichteten und zueinander beabstandeten flachen Federelementen ausgebildet ist oder eine membranartige Federung (34) aufweist.

10. Vorrichtung nach Anspruch 6, **dadurch gekennzeichnet, dass** in dem Rotationskörper (22) zumindest eine Speichereinrichtung (37) für die Messwerte der zumindest einen Messsonde (28) und insbesondere eine Schnittstelle zum Auslesen der Messwerte und/oder eine Sende- und Empfangseinrichtung (38) zur drahtlosen Datenübertragung an eine Auswerteeinrichtung in dem Rotationskörper (22) vorgesehen ist.

11. Vorrichtung nach Anspruch 6, **dadurch gekennzeichnet, dass** an dem einen Rotationskörper (22) eine Anschlagvorrichtung (48), insbesondere eine Anschlagscheibe oder ein Anschlagring, anordenbar ist und der Außendurchmesser der Anschlagvorrichtung (48) größer als der des Rotationskörpers (22) ausgebildet ist.

12. Vorrichtung nach Anspruch 11, **dadurch gekennzeichnet, dass** an der Anschlagvorrichtung (48) an einer seitlichen Umfangsfläche ein Distanzring (49) auswechselbar angeordnet ist.

13. Vorrichtung nach Anspruch 6, **dadurch gekennzeichnet, dass** der zumindest eine Rotationskörper (22) mit der zumindest einen Messsonde an einem Messwagen vorgesehen ist, der zumindest eine Führungsrolle (45) aufweist und vorzugsweise ein Fahrgestell (43) umfasst, in welchem insbesondere ein Haltemagnet (46) angeordnet ist.

14. Vorrichtung nach Anspruch 6, **dadurch gekennzeichnet, dass** der Lauffläche (23) des Rotationskörpers (22), welcher gegenüber die zumindest eine Messsonde (28) hervorsteht, eine Reinigungsvorrichtung zugeordnet ist, welche zumindest die Aufsetzkalotte (31) der Messsonde (28) reinigt.

## Claims

1. Method for measuring the thickness of thin layers over large-area surfaces to be measured (12), in which at least one measuring probe (28), which comprises at least one sensor element (29) and at least one contact spherical cap (31) associated with the sensor element (29), is applied to the surface to be measured (12) in order to obtain a measured value, **characterised in that**
- the large-area surface to be measured (12) is subdivided into individual partial areas (14),
- a matrix of measurement points (16) is determined for each partial area (14) to be inspected,
- a device (21) carrying the at least one measuring probe (28), which comprises at least one rotating body (22) comprising at least one running face (23) and receives the at least one measuring probe (28), is placed on the surface to be measured (12) and rolled along at least one row (17) of the matrix of the partial area (14) and measured values are ascertained at equidistant measurement points (16),
- the measured values are ascertained successively for all rows (17) of the matrix in the partial area (14) and evaluated for this partial area (14).

2. Method according to claim 2, **characterised in that** the at least one measuring probe (28) is guided over the surface to be measured (12) along a cycloid path and is contacted against the individual measurement points (16).

3. Method according to either claim 1, **characterised in that** a stop device (48), in particular a stop washer or a stop ring, with a diameter greater than that of the rotating body (22), is attached to the rotating body (22), and **in that** the device (21) comprising the stop device (48) is guided along an edge of the surface to be measured (12).

4. Method according to claim 1, **characterised in that** the device (21) comprising the at least one measuring probe (28) is placed, at predetermined regular time intervals, on a rotating surface to be measured (12) or on a surface to be measured (12) which is guided in a band-like manner.

5. Method according to claim 1, **characterised in that** the mean value x̅ and the standard deviation s are determined from the measured values of each partial area (14), and from this a coefficient of variation V = 100 x s/x̅ % is ascertained which is compared as a comparative value with an evaluation chart for assessing the quality of the coating.

6. Device for measuring the thickness of thin layers over large-area surfaces to be measured (12), in particular for carrying out the method according to any one of claims 1 to 4, comprising at least one measuring probe (28), which comprises at least one sensor element (29) and at least one contact spherical cap (31) associated with the sensor element (29), **characterised in that** the at least one measuring probe (28) is arranged on a rotating body (22) comprising a running face (23), wherein the running face (23) is provided for being placed on the surface to be measured (12) and to be guided along and the contact spherical cap (31) of the measuring probe (28) protruding radially outwardly, at least slightly, from the running face (23) and being arranged so as to be corotating on the rotating body (22), in such a way that the measuring probe (28) is guided along a cycloid path relative to the surface to be measured (12).

7. Device according to claim 6, **characterised in that** two or more rotating bodies (22) are provided which are rotatably mounted and guided on a common axle and only one rotating body (22) receives the at least one measuring probe (21).

8. Device according to claim 6, **characterised in that** two or more rotating bodies (22), which each receive at least one measuring probe (28), are connected to a rigid axle (41) and the measuring probes (28) are orientated in the same angular position.

9. Device according to claim 6, **characterised in that** the measuring probe (28) is mounted resiliently and flexibly so as to be sunk in the rotating body (22) relative to the running face (23) and, in particular, a spring assembly of two parallel and mutually spaced flat spring elements is formed or else a diaphragm-like spring assembly (34) is comprised.

10. Device according to claim 6, **characterised in that** at least one storage means (37) is provided in the rotating body (22) for the measured values of the at least one measuring probe (28), and in particular an interface is provided in the rotating body (22) for reading out the measured values and/or a transmitting and receiving means (38) is provided in the rotating body (22) for wireless data transfer to an evaluation means.

11. Device according to claim 6, **characterised in that** a stop device (48), in particular a stop washer or a stop ring, is arranged on one rotating body (22) and the outer diameter of the stop device (48) is greater than that of the rotating body (22).

12. Device according to claim 11, **characterised in that** a spacer ring (49) is replaceably arranged on the stop device (48) on a lateral peripheral face.

13. Device according to claim 6, **characterised in that** the at least one rotating body (22) comprising the at least one measuring probe is provided on a measuring carriage which comprises the at least one guide roller (45) and preferably comprises an undercarriage (43) in which a holding magnet (46) in particular is arranged.

14. Device according to claim 6, **characterised in that** a cleaning device is associated with the running face (23) of the rotating body (22), which face protrudes from the at least one measuring probe (28), said cleaning device cleaning at least the contact spherical cap (31) of the measuring probe (28).

## Revendications

1. Procédé destiné à mesurer l'épaisseur de couches minces sur des surfaces de mesure (12) de grande taille, lors duquel au moins une sonde de mesure (28) qui présente au moins un élément capteur (29) et au moins une calotte de positionnement (31) affectée audit élément capteur (29) est positionnée sur la surface de mesure (12) en vue de saisir une valeur de mesure, **caractérisé en ce que**
- la surface de mesure (12) de grande taille est divisée en surfaces partielles individuelles (14),
- une matrice de points de mesure (16) est déterminée pour chaque surface partielle (14) à inspecter,
- un dispositif (21) portant ladite au moins une sonde de mesure (28), lequel présente un corps de rotation (22) avec au moins une surface de roulement (23) et reçoit au moins une sonde de mesure (28), est positionné sur la surface de mesure (12), est déroulé le long d'au moins une ligne (17) de la matrice de la surface partielle (14) et **en ce que** des valeurs de mesure sont saisies au niveau de points de mesure (16) équidistants et
- les valeurs de mesure sont saisies successivement pour toutes les lignes (17) de la matrice dans la surface partielle (14) et sont évaluées pour ladite surface partielle (14).

2. Procédé selon la revendication 1, **caractérisé en ce que** ladite au moins une sonde de mesure (28) est conduite sur la surface de mesure (12) le long d'une trajectoire cycloïdale et est positionnée au niveau des points de mesure (16) individuels.

3. Procédé selon la revendication 1, **caractérisé en ce qu'**un dispositif de butée (48), en particulier une rondelle de butée ou un anneau de butée, pourvu d'un diamètre supérieur à celui du corps de rotation (22) est monté sur le corps de rotation (22), et **en ce que** le dispositif (21) est conduit le long d'une arête de la surface de mesure (12) à l'aide du dispositif de butée (48).

4. Procédé selon la revendication 1, **caractérisé en ce que** le dispositif (21) portant ladite au moins une sonde de mesure (28) est positionné, à des intervalles de temps identiques prédéfinis, sur une surface de mesure (12) en rotation ou une surface de mesure (12) en forme de bande.

5. Procédé selon la revendication 1, **caractérisé en ce que** les valeurs moyennes x̅ et l'écart type s sont déterminés à partir des valeurs de mesure de chaque surface partielle (14), et qu'à partir de cela est déterminé un coefficient de variation V = 100 x s/x̅ % qui est mis en rapport, en tant que valeur de comparaison, avec un tableau d'évaluation destiné à juger de la qualité du revêtement.

6. Dispositif destiné à mesurer l'épaisseur de couches minces sur des surfaces de mesure (12) de grande taille, en particulier pour mettre en oeuvre le procédé selon l'une quelconque des revendications 1 à 5, avec au moins une sonde de mesure (28) qui présente un élément capteur (29) et au moins une calotte de positionnement (31) affectée audit élément capteur (29), **caractérisé en ce que** ladite au moins une sonde de mesure (28) est disposée sur un corps de rotation (22) pourvu d'une surface de roulement (23), la surface de roulement (23) étant conçue de manière à pouvoir être positionnée sur la surface de mesure (12) et être conduite le long de celle-ci, et **en ce que** la calotte de positionnement (31) de la sonde de mesure (28) fait saillie au moins légèrement de manière radiale vers l'extérieur par rapport à la surface de roulement (23) et est disposée sur le corps de rotation (22) de manière à tourner avec celui-ci, de sorte que la sonde de mesure (28) est conduite le long d'une trajectoire cycloïdale par rapport à la surface de mesure (12).

7. Dispositif selon la revendication 6, **caractérisé en ce qu'**il est prévu deux ou plusieurs corps de rotation (22) qui sont montés de manière à tourner autour d'un axe commun et sont conduits sur celui-ci et **en ce que** seul un corps de rotation (22) reçoit ladite au moins une sonde de mesure (28).

8. Dispositif selon la revendication 6, **caractérisé en ce que** deux ou plusieurs corps de rotation (22), qui reçoivent respectivement au moins une sonde de mesure (28), sont reliés par un axe rigide (41) et **en ce que** les sondes de mesure (28) sont orientées dans la même position angulaire.

9. Dispositif selon la revendication 6, **caractérisé en ce que** la sonde de mesure (28) est montée de manière résiliente dans le corps de rotation (22) afin de rentrer par rapport à la surface de roulement (23) et présente en particulier une suspension composée de deux éléments élastiques plats situés à une distance donnée l'un de l'autre et orientés de manière parallèle, ou **en ce qu'**elle présente une suspension (34) en forme de membrane.

10. Dispositif selon la revendication 6, **caractérisé en ce que** dans le corps de rotation (22) sont prévus au moins un dispositif de stockage (37) pour les valeurs de mesure de ladite au moins une sonde de mesure (28) et en particulier une interface destinée à lire lesdites valeurs de mesure et/ou un dispositif d'émission et de réception (38) destiné à transmettre des données sans fils à un dispositif d'évaluation situé dans le corps de rotation (22).

11. Dispositif selon la revendication 6, **caractérisé en ce qu'**un dispositif de butée (48), en particulier une rondelle de butée ou un anneau de butée, peut être disposé sur ledit un des corps de rotation (22) et que le diamètre extérieur du dispositif de butée (48) est supérieur à celui du corps de rotation (22).

12. Dispositif selon la revendication 11, **caractérisé en ce qu'**une bague d'espacement (49) est disposée de manière échangeable sur une surface circonférentielle latérale du dispositif de butée (48).

13. Dispositif selon la revendication 6, **caractérisé en ce que** ledit au moins un corps de rotation (22) portant ladite au moins une sonde de mesure est prévu sur un chariot de mesure qui présente au moins un rouleau de guidage (45) et comprend de préférence un mécanisme de déplacement (43) dans lequel est disposé en particulier un aimant de maintien (46).

14. Dispositif selon la revendication 6, **caractérisé en ce qu'**un dispositif de nettoyage qui nettoie au moins la calotte de positionnement (31) de la sonde de mesure (28) est affecté à la surface de roulement (23) du corps de rotation (22) par rapport à laquelle ladite au moins une sonde de mesure (28) fait saillie.
